# EUROPÄISCHE PATENTSCHRIFT

(11) **EP 1 828 641 B1**
(45) Veröffentlichungstag und Bekanntmachung des Hinweises auf die Patenterteilung: **27.07.2011**
(21) Anmeldenummer: 05816504.4
(22) Anmeldetag: 08.12.2005
(51) Int. Cl.: F16H 59/70, G01D 5/14, G01D 5/16, G01D 5/20, G01B 7/02, G01B 7/30

(54) **VORRICHTUNG ZUM SCHALTEN VON ÜBERSETZUNGSÄNDERUNGEN**
DEVICE FOR SHIFTING CHANGES IN THE TRANSMISSION RATIO
DISPOSITIF POUR EFFECTUER LA COMMUTATION ENTRE DES RAPPORTS DE TRANSMISSION

(30) Priorität: 17.12.2004 DE 102004060771
(43) Veröffentlichungstag der Anmeldung: 05.09.2007
(73) Patentinhaber: AUDI AG, 85045 Ingolstadt (DE)
(72) Erfinder: MÄRKL, Johann, 85049 Ingolstadt (DE)
(74) Vertreter: Lehle, Josef
(86) Internationale Anmeldenummer: PCT/EP2005/013161
(87) Internationale Veröffentlichungsnummer: WO 2006/066738

(56) Entgegenhaltungen:
- WO-A-2005/064281
- DE-A1- 4 208 888
- DE-A1- 19 908 036
- GB-A- 2 096 421
- US-A- 4 471 304
- US-A- 5 743 143
- US-B1- 6 253 460
- US-B1- 6 736 024

## Beschreibung

Die Erfindung betrifft eine Vorrichtung zum Schalten von Übersetzungsänderungen in Geschwindigkeits-Wechselgetrieben von Kraftfahrzeugen.

Zur Steuerung von Übersetzungsänderungen in Geschwindigkeits-Wechselgetrieben von Kraftfahrzeugen, insbesondere bei automatisierten Wechselgetrieben, ist es erforderlich, die Positionen der einzelnen Schaltelemente, z.B. einer Schaltwelle und/oder von Schaltstangen oder -schienen, zu sensieren und elektronisch zu verarbeiten.

Durch die DE 199 08 036 A1 ist es z. B. bekannt, an einer verdrehbaren und axial verschiebbaren Schaltwelle mehrere Magnete anzubauen, die mit zwei ortsfesten, elektrischen Spulen als Sensoren entsprechende Positionssignale der Schaltwelle generieren. Bei der Vorrichtung gemäß DE 197 48 115 C2 ist dazu an der Schaltwelle ein Ringelement angeordnet, das auf seinem äußeren Umfang magnetisiert ist und das mit radial an dessen Umfang angeordneten Hallsensoren zusammenwirkt. In beiden Fällen ist der Herstellungsaufwand durch den Anbau der Magnete erhöht und zusätzlicher Bauraum erforderlich.

Die DE 42 08 888 A1, die alle Merkmale der Oberbegriffe der unabhängigen Ansprüche 1 und 7 offenbart, zeigt eine Vorrichtung zum Schalten von Übersetzungsänderungen in einem Geschwindigkeitswechselgetriebe für Kraftfahrzeug, die mit zumindest einem axial verschiebbaren und/oder verdrehbaren Schaltelement und mit einer elektrischen Postitionserkennung des Schaltelements versehen ist, wobei am Schaltelement zumindest ein Magnet angeordnet ist, der in Verbindung mit einem ortsfesten Sensor Positionssignale generiert.

Die Aufgabe der Erfindung wird darin gesehen, eine gattungsgemäße Vorrichtung so weiterzubilden, dass eine sichere und lagegenaue Positionserkennung eines Schaltelements bei einem insgesamt einfachen, raum- und gewichtssparenden Aufbau möglich wird.

Diese Aufgabe wird mit den Merkmalen des Patentanspruches 1 oder 7 gelöst. Vorteilhafte Weiterbildungen der Erfindung sind den weiteren Patentansprüchen entnehmbar.

Es wird vorgeschlagen, dass der zumindest eine Magnet unmittelbar durch einen magnetisierten Bereich am Schaltelement gebildet ist. Dadurch können separate Magnete und deren Montage an den Schaltelementen entfallen, wobei zusätzlich durch deren Integration in das Schaltelement Einbauraum gespart wird.

Erfindungsgemäβ ist das Schaltelement im magnetisierten Bereich derart ausgebildet, dass ein einem oder mehreren Magneten ähnliches Magnetfeld erzielt ist. Damit können ein oder mehrere Positionssignale zuverlässig generiert werden.

Der Querschnitt des Schaltelementes im magnetisierten Bereich kann dabei im Wesentlichen quadratisch ausgeführt sein.

Gemäβ Anspruch 1 ist das stabförmige Schaltelement zumindest im magnetisierten Bereich verjüngt ausgebildet, so dass der Sensor, z. B. ein Hallsensor oder eine kleine Spule, bauraumgünstig innerhalb des Umfangsbereiches des übrigen Schaltelementes liegen kann.

Die Verjüngung kann bevorzugt je nach baulichen Gegebenheiten durch eine einseitige oder durch beidseitige Aussparungen am Schaltelement hergestellt sein.

Gemäβ Anspruch 7 ist zumindest im magnetisierten Bereich des Schaltelementes eine langlochförmige Aussparung vorgesehen, mittels der in einfacher Weise ein bevorzugter Querschnitt des oder der magnetisierten Bereiche des Schaltelementes sichergestellt werden kann.

So können von den beiderseits der Aussparung gebildeten Schenkeln des Schaltelementes ein Schenkel magnetisiert sein, dem der ortsfeste Sensor benachbart ist, oder es können die beiderseits der Aussparung gebildeten Schenkel des Schaltelementes magnetisiert sein, wobei dann der ortsfeste Sensor baulich besonders günstig in die Aussparung einragen kann.

Fertigungstechnisch besonders einfach kann das Schaltelement als eine axial verschiebbare Schaltschiene mit im wesentlichen einen rechteckförmigen Querschnitt ausgeführt sein. Dabei können zur weiteren Reduzierung des Fertigungsaufwandes die an der Schaltschiene zumindest im magnetisierten Bereich vorgesehenen Aussparungen und/oder Verjüngungen stanztechnisch hergestellt sein.

Mehrere Ausführungsbeispiele der Erfindung sind im folgenden mit weiteren Einzelheiten näher erläutert. Die schematische Zeichnung zeigt in:
- **Fig. 1**: eine teilweise ersichtliche Schaltschiene eines Wechselgetriebes für Kraftfahrzeuge in einer Seitenansicht, mit einer Verjüngung im magneti- sierten Bereich;
- **Fig. 2**: einen Querschnitt gemäß Linie II - II der Fig. 1 durch die Schaltschiene;
- **Fig. 3**: eine weitere Schaltschiene gemäß Fig. 1, jedoch mit einer langlochför- migen Aussparung im magnetisierten Bereich;
- **Fig. 4**: einen Querschnitt entlang der Linie IV - IV der Fig. 3 durch die Schalt- schiene;
- **Fig. 5**: eine weitere, alternative Schaltschiene gemäß Fig. 1 mit einer langloch- förmigen Aussparung und zwei magnetisierten Bereichen; und
- **Fig. 6**: einen Querschnitt gemäß Linie VI - VI der Fig. 5 durch die Schaltschie- ne.

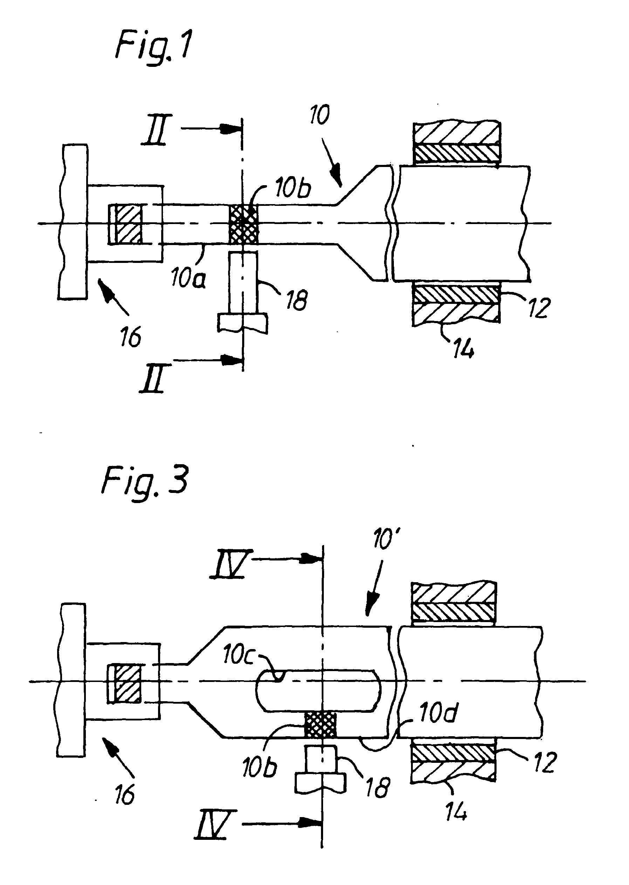

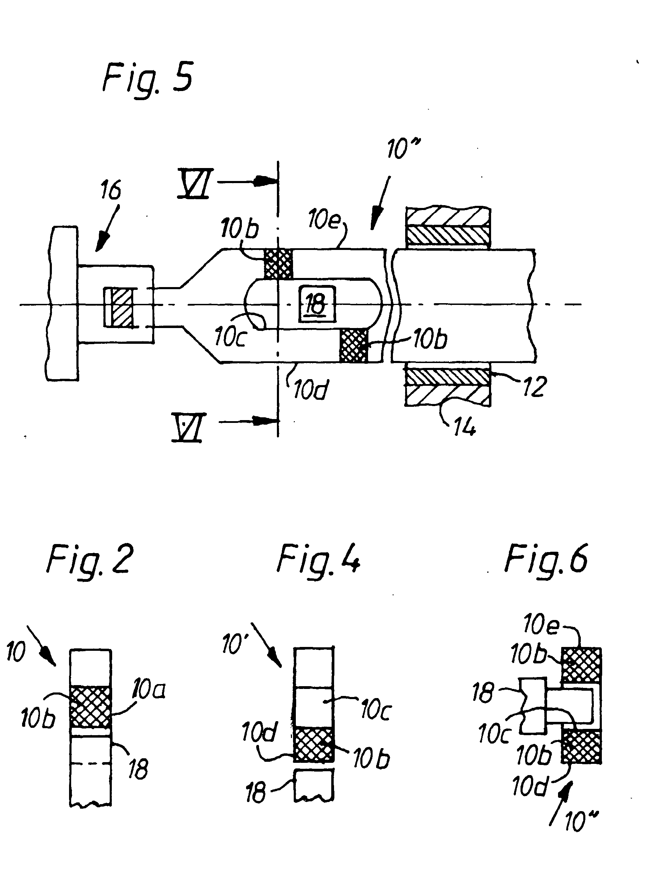

Die **Fig. 1** **und** **2** zeigen ein nur teilweise dargestelltes Schaltelement bzw. eine Schaltschiene 10, die in einer nicht näher gezeigten Lagerung 12 in einer Gehäusewand 14 eines Geschwindigkeits-Wechselgetriebes für Kraftfahrzeuge axial verschiebbar gelagert ist. Die Schaltschiene 10 ist an ihrem einen Ende mit einem z.B. elektromagnetisch wirkenden Aktuator 16 verbunden und kann somit aus einer Mittelstellung in zwei Positionen auf der Zeichnung nach links oder rechts verschoben werden, wobei in nicht gezeigter Weise über eine mit der Schaltschiene 10 verbundene Schaltgabel und Synchronkupplung Übersetzungsänderungen bzw. Gänge schaltbar sind. Im Wechselgetriebe können mehrere Schaltschienen 10 der gezeigten Art gelagert und mittels Aktuatoren 16 betätigt sein.

Die Ansteuerung des Aktuators 16 erfolgt in bekannter Weise über eine elektronische Getriebesteuerung, die auch mit einem oder mehreren, ortsfest angeordneten Sensoren 18 zur Positionserkennung der Schaltschiene 10 verbunden ist. Die Sensoren 18 sind Hallsensoren oder kleine Spulen bekannter Bauart, die im Zusammenwirken mit ein oder mehreren Magnetfeldern an der Schaltschiene 10 Positionssignale generieren, die im nicht dargestellten, elektronischen Getriebesteuergerät entsprechend ausgewertet werden.

Die Schaltschiene 10 ist im Querschnitt rechteckförmig ausgebildet und im Bereich des Positionssensors 18 mit einem verjüngten Abschnitt 10a derart versehen, dass dieser Abschnitt 10a einen etwa quadratischen Querschnitt aufweist (vgl. **Fig. 2**).

Im Bereich des Sensors 18, der wie ersichtlich in den Umfangsbereich der Schaltschiene 10 bis dicht an den verjüngten Abschnitt 10a einragt, ist ein magnetisierter Bereich 10b (kreuzschraffiert dargestellt) ausgebildet, der ein einem Dauermagneten ähnliches Magnetfeld zur Ansteuerung des Sensors 18 erzeugt. So kann der Hallsensor 18 in der in der **Fig. 1** gezeigten Position der Schaltschiene 10 ein Positionssignal für eine Neutralstellung oder eine Gangstellung der Schaltschiene 10 abgeben. Es können auch mehrere Sensoren 18 nebeneinander vorgesehen sein, die bei entsprechender Verschiebung der Schaltschiene 10 unterschiedliche Positionssignale abgeben. Umgekehrt können ggf. auch mehrere, zueinander beabstandete, magnetisierte Bereiche 10b vorgesehen sein.

Die **Fig. 3** **und** **4** zeigen eine alternative Schaltschiene 10', die nur soweit beschrieben ist, als sie sich wesentlich von der Schaltschiene 10 gemäß den Fig. 1 und 2 unterscheidet. Gleiche Teile sind mit gleichen Bezugszeichen versehen.

Anstelle eines verjüngten Abschnittes 10a ist die Schaltschiene 10' mit einer außerhalb der Mittelachse der Schaltschiene 10' liegenden, langlochförmigen Aussparung 10c versehen. An dem die Aussparung 10c begrenzenden, unteren Schenkel 10d der Schaltschiene 10', der im Querschnitt (vgl. **Fig. 4**) wiederum etwa quadratisch gewählt ist, ist der magnetisierte Bereich 10b ausgeführt, der wie vorbeschrieben mit dem Sensor 18 zusammenwirkt. Die Anordnung des Sensors 18 liegt hier wie ersichtlich außerhalb des Umfangsbereiches der Schaltschiene 10'.

Die **Fig. 5 und 6** zeigen eine weitere, alternative Schaltschiene 10", die wiederum nur soweit beschrieben ist, als sie sich wesentlich von der Schattschiene 10 gemäß den Fig. 1 und 2 unterscheidet. Gleiche Teile sind mit gleichen Bezugszeichen versehen.

Die Schaltschiene 10" weist eine symmetrisch in der Mittelachse der Schaltschiene 10" liegende, langlochförmige Aussparung 10c auf, in die in abweichender Anordnung der ortsfeste Sensor 18 seitlich einragt (vgl. **Fig. 6**).

Die gleich stark und im Querschnitt etwa quadratisch ausgeführten, die Aussparung 10c begrenzenden Schenkel 10d und 10e sind mit je einem magnetisierten Bereich 10b versehen, die axial zueinander versetzt liegen und die beide mit dem Sensor 18 zusammenwirken und bei jeweiliger Überdeckung mit dem Sensor 18 ein Positionssignal generieren.

Die beschriebenen Schaltschienen 10 aus Stahl können im Stanzverfahren hergestellt sein, wobei auch der verjüngte Abschnitt 10a oder die Aussparungen 10c entsprechend mit eingestanzt werden.

Die Erfindung ist nicht auf das dargestellte Ausführungsbeispiel beschränkt. Anstelle einer Schaltschiene 10 als Schaltelement kann auch eine axial verschiebbare Schaltstange und/oder eine rotatorisch und translatorisch bewegbare Schaltwelle (z. B. zur Gangvorwahl und Gangschaltung) als Schaltelement eines Wechselgetriebes verwendet sein.

## Patentansprüche

1. Vorrichtung zum Schalten von Übersetzungsänderungen in einem Geschwindigkeits-Wechselgetriebe für Kraftfahrzeuge, mit zumindest einem axial verschiebbaren und/oder verdrehbaren Schaltelement (10) und mit einer elektrischen Positionserkennung des Schaltelementes (10), wobei am Schaltelement (10) zumindest ein Magnet angeordnet ist, der in Verbindung mit einem ortsfesten Sensor (18) Positionssignale generiert, wobei das Schaltelement (10) stabförmig ausgebildet ist,
**dadurch gekennzeichnet, dass** der zumindest eine Magnet unmittelbar durch einen magnetisierten Bereich (10b) am Schaltelement (10) gebildet ist,
dass das Schaltelement (10) im magnetisierten Bereich (10b) derart ausgebildet ist, dass ein einem oder mehreren Dauermagneten ähnliches Magnetfeld erzielt ist,
und dass das Schaltelement (10) im magnetisierten Bereich (10b) mit einem verjüngten Abschnitt (10a) versehen ist.

2. Vorrichtung nach Anspruch 1, **dadurch gekennzeichnet, dass** der Querschnitt des Schaltelementes (10) im magnetisierten Bereich (10b) im Wesentlichen quadratisch ausgeführt ist.

3. Vorrichtung nach Anspruch 1, **dadurch gekennzeichnet, dass** der verjüngte Abschnitt (10a) durch eine einseitige oder durch beidseitige Aussparungen am Schaltelement (10) hergestellt ist.

4. Vorrichtung nach einem oder mehreren der vorhergehenden Ansprüche, **dadurch gekennzeichnet, dass** an dem Schaltelement (10) mehrere magnetisierte Bereiche (10b) und/oder mehrere Sensoren (18) vorgesehen sind.

5. Vorrichtung nach einem oder mehreren der vorhergehenden Ansprüche, **dadurch gekennzeichnet, dass** das Schaltelement als eine axial verschiebbare Schaltschiene (10) mit im Wesentlichen einen rechteckförmigen Querschnitt ausgeführt ist.

6. Vorrichtung nach Anspruch 5, **dadurch gekennzeichnet, dass** die an der Schaltschiene (10) zumindest im magnetisierten Bereich (10b) vorgesehenen Verjüngungen (10a) stanztechnisch hergestellt sind.

7. Vorrichtung zum Schalten von Übersetzungsänderungen in einem Geschwindigkeits-Wechselgetriebe für Kraftfahrzeuge, mit zumindest einem axial verschiebbaren und/oder verdrehbaren Schaltelement (10'; 10") und mit einer elektrischen Positionserkennung des Schaltelementes (10'; 10"), wobei am Schaltelement (10'; 10") zumindest ein Magnet angeordnet ist, der in Verbindung mit einem ortsfesten Sensor (18) Positionssignale generiert, wobei das Schaltelement (10'; 10") stabförmig ausgebildet ist,
**dadurch gekennzeichnet, dass** der zumindest eine Magnet unmittelbar durch einen magnetisierten Bereich (10b) am Schaltelement (10'; 10") gebildet ist,
dass das Schaltelement (10'; 10") im magnetisierten Bereich (10b) derart ausgebildet ist, dass ein einem oder mehreren Dauermagneten ähnliches Magnetfeld erzielt ist,
und dass zumindest im magnetisierten Bereich (10b) des Schaltelementes (10'; 10") eine langlochförmige Aussparung (10c) vorgesehen ist.

8. Vorrichtung nach Anspruch 7, **dadurch gekennzeichnet, dass** der Querschnitt des Schaltelementes (10',10") im magnetisierten Bereich (10b) im Wesentlichen quadratisch ausgeführt ist.

9. Vorrichtung nach Anspruch 7, **dadurch gekennzeichnet, dass** von den beiderseits der Aussparung (10c) gebildeten Schenkeln (10d, 10e) des Schaltelementes (10') ein Schenkel (10d) magnetisiert ist, dem der ortsfeste Sensor (18) benachbart ist.

10. Vorrichtung nach Anspruch 7, **dadurch gekennzeichnet, dass** die beiderseits der Aussparung (10c) gebildeten Schenkel (10d, 10e) des Schaltelementes (10") magnetisiert sind und dass der ortsfeste Sensor (18) in die Aussparung (10c) einragt.

11. Vorrichtung nach einem der Ansprüche 7 bis 10, **dadurch gekennzeichnet, dass** an dem Schaltelement (10',10") mehrere magnetisierte Bereiche (10b) und/oder mehrere Sensoren (18) vorgesehen sind.

12. Vorrichtung nach einem der Ansprüche 7 bis 11, **dadurch gekennzeichnet, dass** das Schaltelement als eine axial verschiebbare Schaltschiene (10',10") mit im Wesentlichen einen rechteckförmigen Querschnitt ausgeführt ist.

13. Vorrichtung nach Anspruch 12, **dadurch gekennzeichnet, dass** die an der Schaltschiene (10',10") zumindest im magnetisierten Bereich (10b) vorgesehenen Aussparungen (10c) stanztechnisch hergestellt sind.

## Claims

1. Device for selecting gear ratio changes in a speed change gearbox for motor vehicles, comprising at least one axially displaceable and/or rotatable shift element (10) and an electrical position recognition of the shift element (10), wherein at least one magnet is arranged at the shift element (10), said magnet generating position signals in conjunction with a locally fixed sensor (18), wherein the shift element (10) is configured rod-shaped, **characterised in that** the at least one magnet is formed directly by a magnetised region (10b) at the shift element (10),
that the shift element (10) is configured in the magnetised region (10b) such that a magnetic field similar to that of one or more permanent magnets is achieved,
and that the shift element (10) is provided in the magnetised region (10b) with a narrowed section (10a).

2. Device according to claim 1, **characterised in that** the cross-section of the shift element (10) is configured substantially square in the magnetised region (10b).

3. Device according to claim 1, **characterised in that** the narrowed section (10a) is made by means of a one-sided or by means of two-sided cut-outs in the shift element (10).

4. Device according to one or more of the preceding claims, **characterised in that** a plurality of magnetised regions (10b) and/or a plurality of sensors (18) is provided at the shift element (10).

5. Device according to one or more of the preceding claims, **characterised in that** the shift element is configured as an axially displaceable shift rail (10) with a substantially rectangular cross-section.

6. Device according to claim 5, **characterised in that** the narrowings (10a) provided at the shift rail (10), at least in the magnetised region (10b) are made by punching techniques.

7. Device for selecting gear ratio changes in a speed change gearbox for motor vehicles, comprising at least one axially displaceable and/or rotatable shift element (10'; 10") and an electrical position recognition of the shift element (10'; 10''), wherein at least one magnet is arranged at the shift element (10'; 10''), said magnet generating position signals in conjunction with a locally fixed sensor (18), wherein the shift element (10'; 10") is configured rod-shaped, **characterised in that** the at least one magnet is formed directly by a magnetised region (10b) at the shift element (10'; 10"),
that the shift element (10'; 10") is configured in the magnetised region (10b) such that a magnetic field similar to that of one or more permanent magnets is achieved,
and that at least in the magnetised region (10b) of the shift element (10'; 10") a slot-shaped cut-out (10c) is provided.

8. Device according to claim 7, **characterised in that** the cross-section of the shift element (10'; 10'') is configured substantially square in the magnetised region (10b).

9. Device according to claim 7, **characterised in that** of the limbs (10d, 10e) of the shift element (10') formed on both sides of the cut-out (10c), one limb (10d) which is adjacent to the locally fixed sensor (18) is magnetised.

10. Device according to claim 7, **characterised in that** the limbs (10d, 10e) of the shift element (10") formed on
both sides of the cut-out (10c) are magnetised and that the locally fixed sensor (18) projects into the cut-out (10c).

11. Device according to one of the claims 7 to 10, **characterised in that** a plurality of magnetised regions (10b) and/or a plurality of sensors (18) is provided on the shift element (10'; 10") .

12. Device according to one of the claims 7 to 11, **characterised in that** the shift element is configured as an axially displaceable shift rail (10'; 10") having a substantially rectangular cross-section.

13. Device according to claim 12, **characterised in that** the cut-outs (10c) provided at least in the magnetised region (10b) at the shift rail (10'; 10") are made by punching techniques.

## Revendications

1. Dispositif pour effectuer la commutation entre des rapports de transmission dans une boîte de vitesses pour véhicules automobiles, avec au moins un élément de commutation (10) rotatif et/ou mobile axialement et avec une reconnaissance de positionnement électrique de l'élément de commutation (10), au moins un aimant étant disposé sur l'élément de commutation (10), lequel génère des signaux de positionnement en liaison avec un capteur (18) fixe, l'élément de commutation (10) étant réalisé en forme de barre,
**caractérisé en ce que** l'au moins un aimant est formé directement par une zone magnétisée (10b) sur l'élément de commutation (10),
**en ce que** l'élément de commutation (10) est réalisé dans la zone magnétisée (10b) de telle sorte qu'un champ magnétique semblable à un ou plusieurs aimants permanents soit obtenu,
et **en ce que** l'élément de commutation (10) est pourvu dans la zone magnétisée (10b) d'une section (10a) rétrécie.

2. Dispositif selon la revendication 1, **caractérisé en ce que** la section transversale de l'élément de commutation (10) dans la zone magnétisée (10b) est réalisée de manière essentiellement carrée.

3. Dispositif selon la revendication 1, **caractérisé en ce que** la section (10a) rétrécie est fabriquée par un évidement unilatéral ou par des évidements bilatéraux sur l'élément de commutation (10).

4. Dispositif selon l'une des revendications 1 à 3, **caractérisé en ce que** plusieurs zones (10b) magnétisées et/ou plusieurs capteurs (18) sont prévus sur l'élément de commutation (10).

5. Dispositif selon l'une des revendications 1 à 4, **caractérisé en ce que** l'élément de commutation est réalisé comme une tige de commande des fourchettes (10) mobile axialement avec une section transversale essentiellement rectangulaire.

6. Dispositif selon la revendication 5, **caractérisé en ce que** les rétrécissements (10a) prévus sur la tige de commande des fourchettes (10) au moins dans la zone magnétisée (10b) sont fabriqués par estampage.

7. Dispositif pour effectuer la commutation entre des rapports de transmission dans une boîte de vitesses pour véhicules automobiles, avec au moins un élément de commutation (10' ; 10") rotatif et/ou mobile axialement et avec une reconnaissance de positionnement électrique de l'élément de commutation (10' ; 10"), au moins un aimant étant disposé sur l'élément de commutation (10' ; 10"), lequel génère des signaux de positionnement en liaison avec un capteur fixe (18), l'élément de commutation (10' ; 10") étant réalisé en forme de barre,
**caractérisé en ce que** l'au moins un aimant est formé directement par une zone magnétisée (10b) sur l'élément de commutation (10' ; 10"),
**en ce que** l'élément de commutation (10' ; 10") est réalisé dans la zone magnétisée (10b) de telle sorte qu'un champ magnétique semblable à un ou plusieurs aimants permanents soit obtenu,
et **en ce qu'**au moins dans la zone magnétisée (10b) de l'élément de commutation (10' ; 10") est prévu un évidement (10c) en forme de trou oblong.

8. Dispositif selon la revendication 7, **caractérisé en ce que** la section transversale de l'élément de commutation (10' ; 10") dans la zone magnétisée (10b) est réalisée de manière essentiellement carrée.

9. Dispositif selon la revendication 7, **caractérisé en ce qu'**une branche (10d) à laquelle est contigu le capteur (18) fixe, est magnétisée par les branches (10d, 10e) de l'élément de commutation (10') formées de part et d'autre de l'évidement (10c).

10. Dispositif selon la revendication 7, **caractérisé en ce que** les branches (10d, 10e) de l'élément de commutation (10") formées de part et d'autre de l'évidement (10c) sont magnétisées et **en ce que** le capteur (18) fixe pénètre dans l'évidement (10c).

11. Dispositif selon l'une revendications 7 à 10, **caractérisé en ce que** plusieurs zones magnétisées (10b) et/ou plusieurs capteurs (18) sont prévus sur l'élément de commutation (10' ; 10").

12. Dispositif selon l'une des revendications 7 à 11, **caractérisé en ce que** l'élément de commutation est réalisé comme une tige de commande des fourchettes (10' ; 10") mobile axialement avec une section transversale essentiellement rectangulaire.

13. Dispositif selon la revendication 12, **caractérisé en ce que** les évidements (10c) prévus sur la tige de commande des fourchettes (10' ; 10") au moins dans la zone magnétisée (10b) sont fabriqués par estampage.
